# EUROPEAN PATENT SPECIFICATION

(11) **EP 0 428 230 B1**
(45) Date of publication and mention of the grant of the patent: **01.02.1995**
(21) Application number: 90203009.7
(22) Date of filing: 13.11.1990
(51) Int. Cl.: H05B 3/68, A47J 39/02, H01R 13/24

(54) **Hotplate element**
Wärmeplattenelement
Elément de plaque chaude

(30) Priority: 13.11.1989 NL 8902800
(43) Date of publication of application: 22.05.1991
(73) Proprietor: BEEX B.V., NL-8091 BM Wezep (NL)
(72) Inventor: De Vries, Johannes Teunis Hendrik, NL-8091 BM Wezep (NL)
(74) Representative: de Bruijn, Leendert C.

(56) References cited:
- EP-A- 0 134 929
- EP-A- 0 277 035
- EP-A- 0 331 515
- WO-A-84/03029
- DE-A- 3 011 876
- DE-A- 3 743 446
- DE-U- 8 803 945
- FR-A- 624 615
- GB-A- 2 199 668
- US-A- 2 139 153
- US-A- 3 596 059

## Description

The present invention relates to a hotplate element according to the preamble of claim 1.

Such a hotplate element is known from US -A- 3,596,059. In the embodiment shown therein the heating element forms the top part of the carrier and is made flat. Although such a hotplate element is adequate for heating flat objects such as pans, it is found to be unsatisfactory for keeping plates and dishes which do not have a flat bottom hot. Many of these objects have a raised edge on which, for example, the plate rests. In this way stable placing on a table or the like is obtained, while it is relatively easier to machine such an edge flat than a large flat face. if a plate, dish or the like is placed on a flat hotplate element, the surface available for heat transfer through conduction is very small. This means either that the hotplate element must be set at raised temperature in order to heat the dish placed thereon sufficiently, or that it must be accepted that the temperature of the dish will be relatively low. In the former case there is a risk of burning if no dish is placed on the hotplate element, and in the latter case the hotplate element is not satisfactory for heating dishes for a longer period. This means that plates and the like have to be pre-heated.

Another hotplate element provided with coupling elements for electro-mechanical connection to a corresponding hotplate element and/or a power supply is known from DE-U- 88 03 945.

The object of the invention is to eliminate the disadvantages mentioned above.

This object is achieved in a hotplate element of the type mentioned above by the measures described in the characterizing part of Claim 1. Due to the fact that the heating element is fitted in a spring-loaded manner relative to the carrier, this heating element will rest against the face of, for example, a plate which is placed inside the limit of the raised edge on which such a plate rests. This raised edge is supported on the carrier, and the spring-loaded heating element lies against the face just described.

This means that the surface for heat transfer is much larger, and a lower temperature of the heating element will be adequate while sufficient heat can still be transferred in order to maintain the desired temperature of plate or dish. A further advantage achieved is that the path which the heat has to travel through the ceramic material of the plate or dish is shorter. For the distance over the raised edge need no longer be bridged. Since the coefficient of heat conduction of such a ceramic material is generally not particularly high, this constitutes a further advantage. According to an advantageous embodiment of the invention, the above-described hotplate element is provided with coupling elements for electro-mechanical connection to a corresponding hotplate element and/or power supply. In this way it is possible to couple together a number of hotplate elements to form a system which can be placed on a table. With the aid of a power supply which can be concealed or fitted elsewhere, various hotplate elements can be provided with electrical energy.

According to a further advantageous embodiment of the invention, the coupling elements comprise at the one part to be coupled at least one dovetailed recess and at the other part to be coupled at least one dovetailed projection. Accurate centring relative to each other of the parts to be coupled is provided in this way. If in the process some play remains between the recess and the projection, there can be compensation for the fact that the parts do not lie exactly in line with each other. According to a further advantageous embodiment of the invention, electrical contacts are fitted near the projection or the recess in such a position that if two hotplate elements to be coupled are connected to each other electrical contact is achieved. In this case at least one of the electrical contacts is preferably made spring-loaded. For a more stable anchoring, it is preferable to provide a dovetailed projection and recess lying next to each other at one side of a heating element, with the electrical contact(s) between them. A components system comprising various hotplate elements is achieved through the fact that at least one hotplate element is provided with coupling elements at various sides.

The combination of electrical contact/recess and projection in a preferred embodiment is achieved as a unit which is fitted on the hotplate element.

The invention will be explained below in greater detail with reference to an example of an embodiment shown in the drawing, in which:
Fig. 1 shows schematically in side view two hotplate elements according to the invention coupled together;
Fig. 2 shows a detail of Fig. 1 in top view, and partially cut away;
Fig. 3 shows a cross-section along the line III-III in Fig. 2;
Fig. 4 shows partially cut away a detail of the coupling element according to the invention;
Fig. 5 shows a front view of the coupling element according to the invention;
Fig. 6 shows a sectional view of an electrical contact according to the invention.

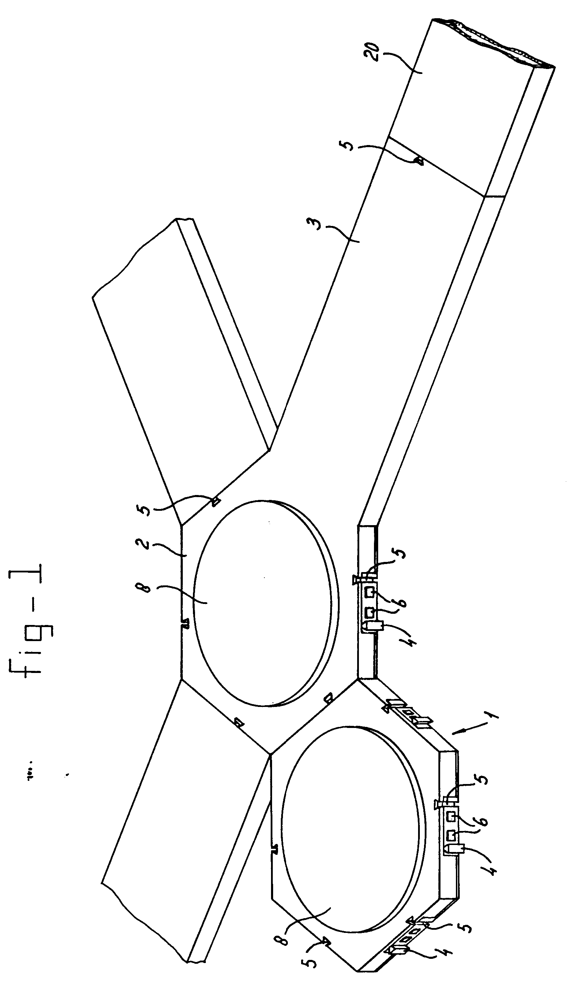

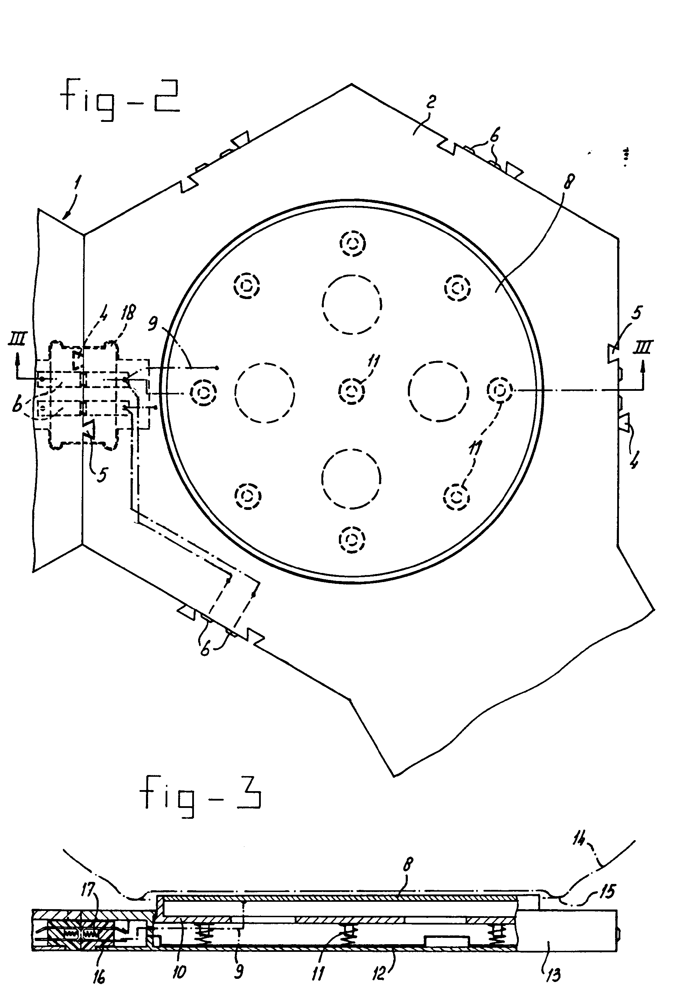

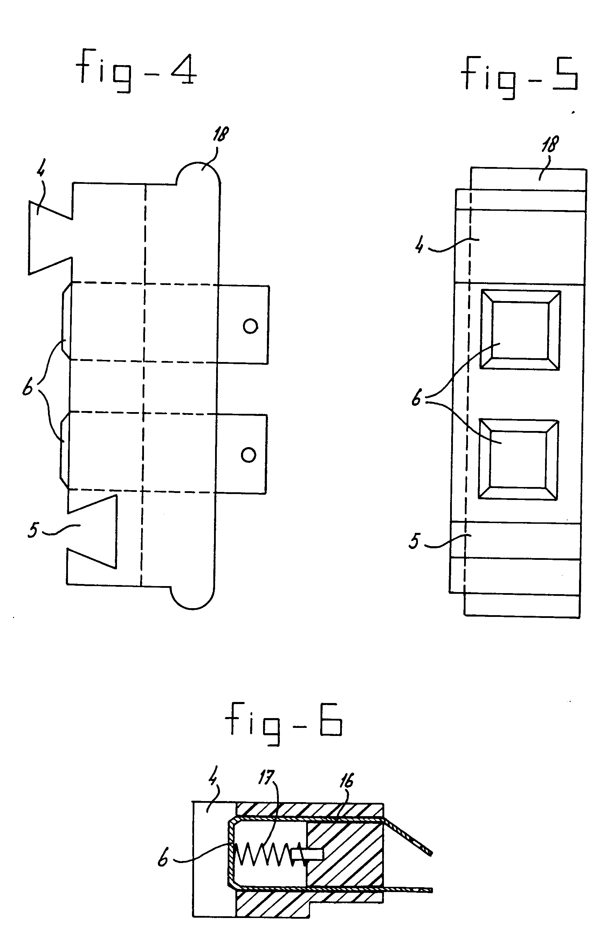

Fig. 1 shows two hotplate elements coupled together, indicated by 1 and 2. In this case hotplate element 2 is provided with a projection 3 fixed to it. It can be seen that the hotplate elements 1 and 2 are connected to each other by means of dovetailed projections 4 or recesses 5 which are of corresponding shape, but with the projections 4 being slightly smaller than the recesses 5, so that a slight clearance exists (see Fig. 2). Two electrical contacts 6 are present between the projections 4 and the recesses 5. These provide a power supply for the heating element 8 shown in Fig. 3. This connection is achieved by electrical cables 9, only one of which is shown. A connection to the adjacent contacts is also present. Heating element 8 is accommodated in a housing 10, which at the bottom side thereof is provided with springs 11 resting on bottom 12 of carrier 13. These springs have such a characteristic that the total spring force exerted by all springs 11 and by which the heating element 8 is driven above the surface of carrier 13 is smaller than the weight of a plate or dish (shown schematically by 14 in the position during placing) coming to rest on it. This means that the surrounding edge 15 of the plate or the dish always rests on the carrier. Stable supporting of plate or dish 14 is thus achieved on the one hand, while optimum contact between heating element 8 and the bottom side of the plate or the dish inside the peripheral edge 15 is ensured, on the other. As can be seen in particular from Fig. 3, contact 6 comprises contact strip 16 and spring 17, as a result of which the front side (see Fig. 5) of the contact is resiliently pressed outwards and will come to rest against the contact lying opposite. The parts containing dovetailed recess 5, projection 4 and two contacts 6 are accommodated in a housing 18, which can be placed as a unit in hotplate element 1 or 2 or another coupling element. A particularly simple modular construction is achieved in this way. The element 20 coupled to part 3 is connected to a power supply which is not shown. Through the spring-loaded nature of the contacts, even if there is a difference in level from, for example, a table (as can occur through the presence of a cloth or the like) and through the movement facility between recess and projection through the not fully equal complementary size, different positions between two hotplate elements can be accepted without this having any effect on the functioning of the device. A relatively great current can be transferred through this special contact. This means that the power supply can be in the form of low-voltage power supply, which makes for greater safety. It is therefore possible with one power supply unit to provide four low-voltage hotplate elements for plates and, for example, six hotplate elements for dishes or the like. Such a power supply can comprise a conventional low-voltage transformer, but also a high-frequency converter. The latter has the advantage that it is short-circuit-proof and is automatically fused. Through the particularly good heat transfer between the heating element and the plate or dish, the temperature of the heating element need not be high, while sufficient heating of the part in question is still provided. For applications where greater distances between different hotplate elements exist, it is possible to use coupling parts which are provided with opposite dovetailed projections (recesses) at the ends.

Although the invention is illustrated above with reference to a preferred embodiment, it will be understood that numerous modifications can be made thereto without going beyond the scope of the present application, such as defined in the claims.

## Claims

1. Hotplate element, comprising a carrier and a heating element connected thereto, the heating element being designed to lie against the object to be heated, characterized in that the heating element is connected in a spring-loaded manner to the carrier and in the unloaded state projects above the carrier.

2. Hotplate element according to Claim 1, in which it is provided with coupling elements for electromechanical connection to a corresponding heating element and/or a power supply.

3. Hotplate element according to Claim 2, in which the coupling elements comprise at the one part to be coupled at least one dovetailed recess and at the other part to be coupled at least one dovetailed projection.

4. Hotplate element according to Claim 3, in which play exists between the recess and the projection.

5. Hotplate element according to Claim 3 or 4, in which at least a first electrical contact is provided near the projection, and a second electrical contact which in the coupled state acts on the first electrical contact is provided near the recess.

6. Hotplate element according to Claim 5, in which at least one of the contacts is made spring-loaded.

7. Hotplate element according to any one of Claims 3 - 6, in which at least one dovetailed recess and one dovetailed projection are provided lying next to each other on a part to be coupled, and the electrical contact(s) is (are) provided between them.

8. Hotplate element according to any one of Claims 2 - 7, in which the hotplate element is provided with coupling elements at different sides.

9. Hotplate element according to any one of Claims 5 - 8, in which electrical contact(s) and recess or projection are fitted in one unit.

## Patentansprüche

1. Wärmeplattenelement mit einem Träger und einem damit verbundenen Heizelement, wobei das Heizelement so ausgebildet ist, daß es an dem zu wärmenden Gegenstand anliegt, dadurch gekennzeichnet, daß das Heizelement mit dem Träger in gefederter Weise verbunden ist und im unbelasteten Zustand über den Träger vorsteht.

2. Wärmeplattenelement nach Anspruch 1, wobei es mit Kuppelelementen zur elektro-mechanischen Verbindung mit einem entsprechenden Heizelement und/oder einer Stromversorgungseinheit versehen ist.

3. Wärmeplattenelement nach Anspruch 2, wobei die Kuppelelemente an dem einen zu kuppelnden Teil mindestens eine schwalbenschwanzförmige Aussparung und an dem anderen zu kuppelnden Teil mindestens einen schwalbenschwanzförmigen Vorsprung aufweisen.

4. Wärmeplattenelement nach Anspruch 3, wobei zwischen der Aussparung und dem Vorsprung Spiel vorhanden ist.

5. Wärmeplattenelement nach Anspruch 3 oder 4, wobei mindestens ein elektrischer Kontakt in der Nähe des Vorsprungs vorgesehen ist und ein zweiter elektrischer Kontakt, der im gekuppelten Zustand auf den ersten Kontakt wirkt, in der Nähe der Aussparung vorgesehen ist.

6. Wärmeplattenelement nach Anspruch 5, wobei mindestens einer der Kontakte federbelastet ist.

7. Wärmeplattenelement nach einem der Ansprüche 3 bis 6, wobei mindestens eine schwalbenschwanzförmige Aussparung und ein schwalbenschwanzförmiger Vorsprung nebeneinanderliegend an einem zu kuppelnden Teil vorgesehen sind und der (die) elektrische(n) Kontakt(e) zwischen ihnen vorgesehen ist (sind).

8. Wärmeplattenelement nach einem der Ansprüche 2 bis 7, wobei das Wärmeplattenelement mit Kuppelelementen an unterschiedlichen Seiten versehen ist.

9. Wärmeplattenelement nach einem der Ansprüche 5 bis 8, wobei der (die) elektrische(n) Kontakt(e) und die Aussparung oder der Vorsprung in einer Einheit zusammengefaßt sind.

## Revendications

1. Elément de plaque chaude, comprenant un support et un élément chauffant lui étant relié, l'élément chauffant étant conçu pour être placé contre l'objet à chauffer, caractérisé en ce que l'élément chauffant est relié au support comme s'il était chargé par un ressort et fait saillie au-dessus du support lorsqu'il est à l'état non chargé.

2. Elément de plaque chaude selon la revendication 1, dans lequel il est pourvu d'éléments de couplage devant assurer une liaison électromécanique à un élément chauffant correspondant et/ou à un unité de puissance correspondant.

3. Elément de plaque chaude selon la revendication 2, caractérisé en ce que les éléments de couplage comprennent, sur une première partie à coupler, au moins une cavité en queue d'aronde, et sur l'autre partie à coupler, au moins une saillie en queue d'aronde.

4. Elément de plaque chaude selon la revendication 3, dans lequel il y a un jeu entre la cavité et la saillie.

5. Elément de plaque chaude selon la revendication 3 ou 4, dans lequel au moins un premier contact électrique est assuré près de la saillie, et un deuxième contact électrique, qui à l'état couplé agit sur le premier contact électrique, est prévu près de la cavité.

6. Elément de plaque chaude selon la revendication 5, dans lequel au moins l'un des contacts est soumis à l'action d'un ressort.

7. Elément de plaque chaude selon l'une quelconque des revendications 3 à 6, dans lequel au moins une cavité en queue d'aronde et au moins une saillie en queue d'aronde sont prévues, placées près l'une de l'autre, sur une partie à accoupler, et le ou les contact()s électrique(s) est (sont) assuré(s) entre elles.

8. Elément de plaque chaude selon l'une quelconque des revendications 2 à 7, dans lequel l'élément de plaque chaude est pourvu d'éléments de couplage, disposés sur des faces différentes.

9. Elément de plaque chaude selon l'une quelconque des revendications 5 à 8, dans lequel le ou les contact(s) électrique(s) et la cavité ou saillie sont réalisés d'un seul tenant.
